# EUROPEAN PATENT SPECIFICATION

(11) **EP 2 395 273 B1**
(45) Date of publication and mention of the grant of the patent: **11.03.2015**
(21) Application number: 11151037.6
(22) Date of filing: 14.01.2011
(51) Int. Cl.: F16L 33/08

(54) **Hose clamp**
Schlauchklemme
Collier de tuyau

(30) Priority: 11.06.2010 KR 20100055553
(43) Date of publication of application: 14.12.2011
(73) Proprietor: Donga Metal Co., Ltd., Waegwan-eup Chilgok-gun, Gyeongbuk (KR)
(72) Inventor: Bae, Dae Jin, Daegu (KR)
(74) Representative: Clark, David James

(56) References cited:
- EP-A1- 2 058 575
- US-A- 5 630 255
- US-A1- 2007 022 578
- US-A1- 2007 107 168

## Description

### BACKGROUND OF THE INVENTION

### 1. Field of the invention

The present invention relates to a hose clamp, and more particularly to an improved hose clamp which can make it easy to restrain and fasten a hose, having a compensation function to maintain a fastening force even when the diameter of the hose is reduced due to aging by long-term use.

### 2. Description of the Prior Art

As generally known in the art, a hose clamp has been used to restrain a hose not to be disengaged when transferring a fluid or a gas in a brake, an air conditioner, a power steering or an engine room of a vehicle, or when delivering a fluid or a gas in industrial workplaces.

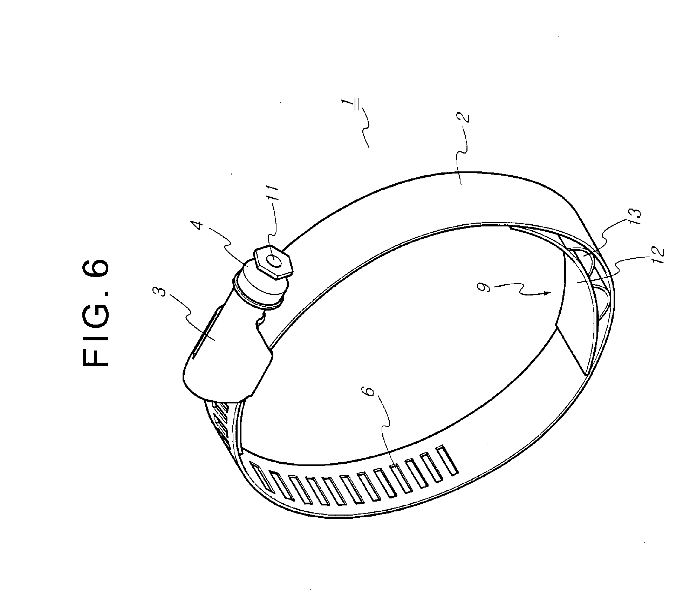

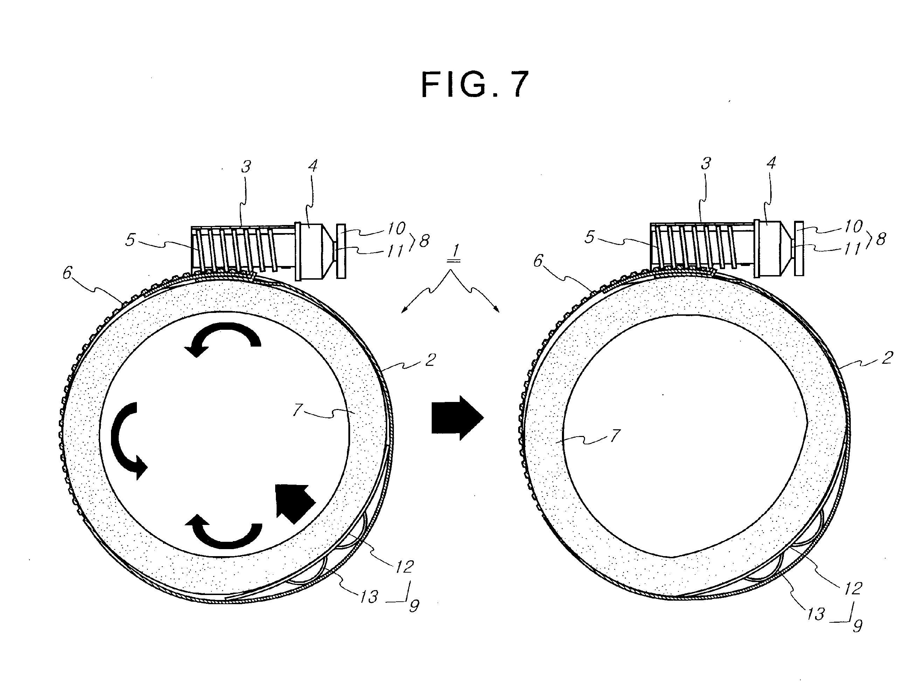

A variety of hose clamps have been employed in the prior art. Recently, a hose clamp having a compensation function has been developed and used, wherein the hose clamp is designed to compensate for a diameter change of the hose so that its securing or fastening force is not lost when there is a diameter change in the hose due to aging by long-term use. US 2007/0022578 discloses such a hose clamp. An exemplary hose clamp is described hereinbelow with reference to Figs. 6 and 7.

A conventional hose clamp 1 having a compensation function is provided with a clamp body 2 which is bent in a circular shape using a resilient plate-shape member with a predetermined width. A restraining housing 3 is secured to the right end portion of the clamp body 2, and a fastening bolt 4 is coupled thereto.

Formed at an inward direction at the left end of the clamp body 2 is a plurality of pierced holes 6, which are engaged with a screw 5 formed at the lateral portion of the fastening bolt 4 to reduce or increase the diameter of the clamp body 2, while approaching or retreating from the right end portion through the revolution of the fastening bolt 4 in a clockwise or counter clockwise direction.

The fastening bolt 4 is provided with a torque limit means 8 to prevent a hose 7 from being excessively restrained beyond the prescribed torque. A compensation means 9 is provided at the middle of the clamp body 2 to restrain the hose 7 in an amount created when the hose diameter is reduced due to the long-term use thereof.

The torque limit means 8 is formed with a head 10 at the outer end of the fastening bolt 4 for using a tool and a tearing part 11 with a reduced diameter between the head 10 and a shaft, which is broken and not to be fastened any more in a case of receiving a torque over the predetermined value.

The compensation means 9 is provided with a circular shape compensating body 12 on the inside of the clamp body 2, and a W-shaped plate spring 13 is installed between the compensating body 12 and the clamp body 2.

In the conventional hose clamp as described above, since the torque limit means and the compensation means are independently spaced apart, the construction of the hose clamp becomes complicated, which requires excessive initial investments and causes to increase production costs thereof.

Meanwhile, the conventional hose clamp is advantageous in that it can maintain a safe fastening state since the tearing part constituting the torque limit means is broken to have the head for using a tool separated from the fastening bolt when the hose clamp is fastened with a torque over the predetermined value at the beginning. However, in case that the hose clamp needs to be separated from the hose for reuse or repair after being fastened, it is impossible to reuse or difficult to repair as the head has been destroyed.

In addition, since the compensation means is separately provided from the clamp body and installed thereto, its productivity is not favorable. Moreover, the construction of the compensation means is relatively much stronger than that of the clamp body, which abruptly deforms the hose portion at which the compensation means is positioned when the compensation means is operated corresponding to the change of the hose, resulting in an obstacle for a fluid flowing therein.

Further, since the opposite ends of the clamp body in a widthwise direction are cut at a right angle to form sharp edges, and the pierced hole parts to be coupled with the screw of the clamp body are directly brought in contact with the surface of the hose during a fastening operation, both the opposite ends of the clamp body and the pierced hole parts are penetrated into the hose by the fastening force of the clamp body.

As mentioned above, when the clamp body and the pierced hole parts are penetrated into the surface of the hose to damage the latter, it serves to accelerate damage of the hose due to accumulation of fatigue or the like. Accordingly, because of such damage on the hose, the fluid is leaked from the hose, which causes problems to make it impossible to provide the fluid through the hose in a stable manner.

### SUMMARY OF THE INVENTION

Accordingly, the present invention has been made to solve the above-mentioned problems occurring in the prior art, and an object of the present invention is to provide a hose clamp for increasing the fastening force of a hose and preventing damage to the hose even when the hose diameter is reduced due to aging by long-term use.

In order to accomplish this object, there is provided a hose clamp with the features of claim 1.

Therefore, it should be appreciated that the hose clamp of the present invention is integrally provided with the compensation means at the clamp body which can perform a compensation function of itself to firmly fasten the hose being loosened without an operator's separate work when the hose becomes aged, thereby facilitating the production of the hose and reducing its production cost. Further, the hose clamp of the present invention is able to prevent the surface of the hose from being damaged by the pierced holes, which makes it possible to improve the quality of the hose clamp.

### BRIEF DESCRIPTION OF THE DRAWINGS

The above and other objects, features and advantages of the present invention will be more apparent from the following detailed description taken in conjunction with the accompanying drawings, in which:
Fig. 1 is a perspective view illustrating one embodiment of a hose clamp in accordance with the present invention;
Fig. 2 is a cross-sectional view taken along line A-A in Fig. 1;
Fig. 3 is a cross-sectional view taken along line B-B in Fig. 1;
Fig. 4 is a cross-sectional view taken along line C-C in Fig. 1;
Fig. 5 is a partial cross-sectional view illustrating the deformation state of a portion indicated by D in Fig. 1;
Fig. 6 is a perspective view illustrating a conventional hose clamp; and
Fig. 7 is a cross-sectional view illustrating the operational state of the conventional hose clamp.

### DETAILED DESCRIPTION OF THE EXEMPLARY EMBODIMENTS

Hereinafter, an exemplary embodiment of the present invention will be described with reference to the accompanying drawings. In the following description and drawings, the same reference numerals are used to designate the same or similar components, and so repetition of the description on the same or similar components will be omitted.

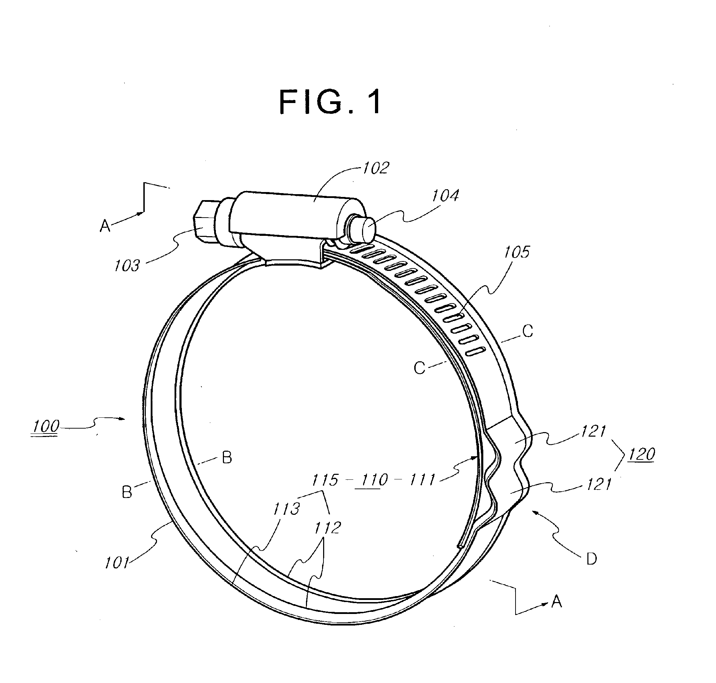

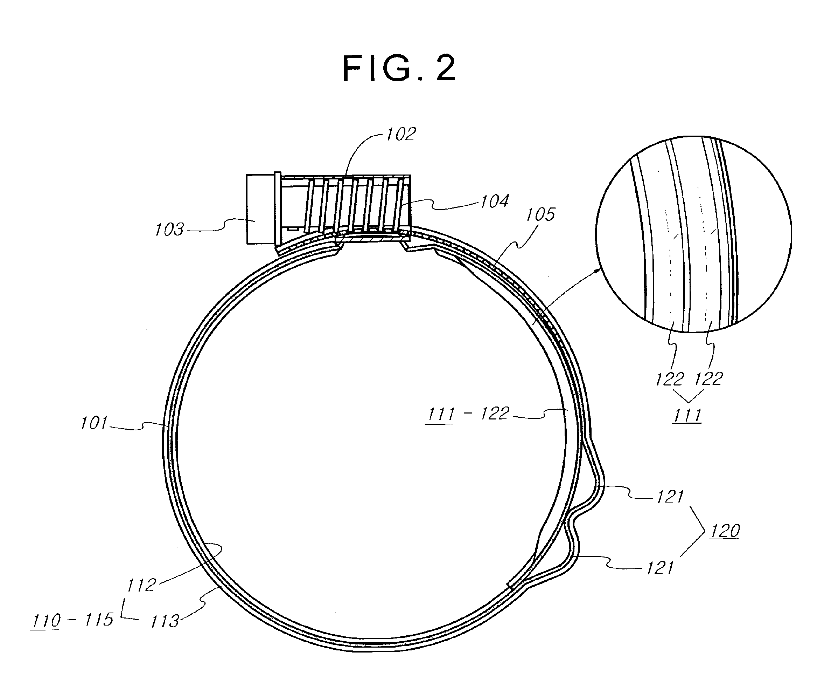

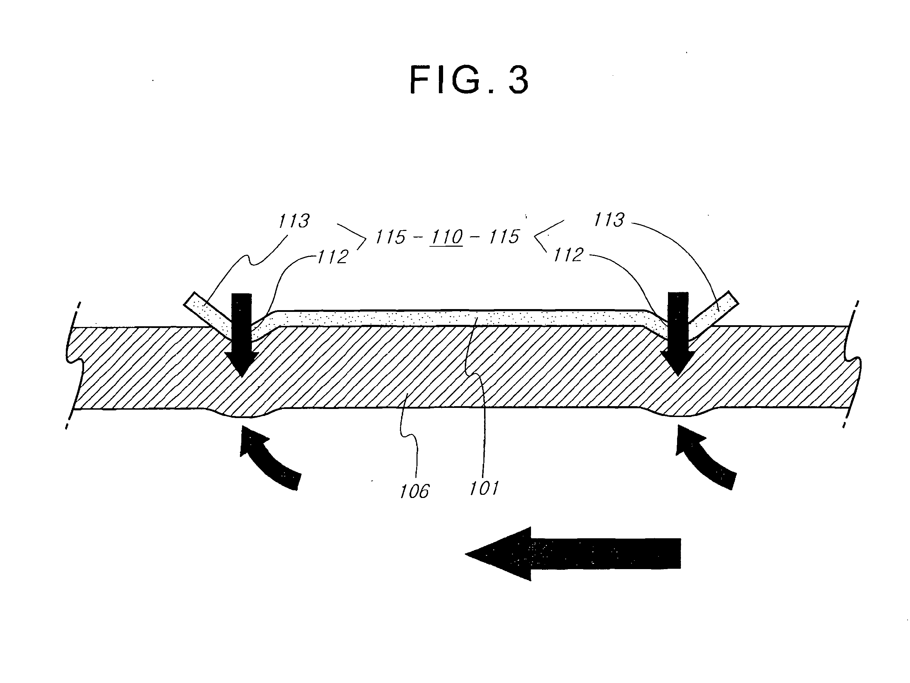

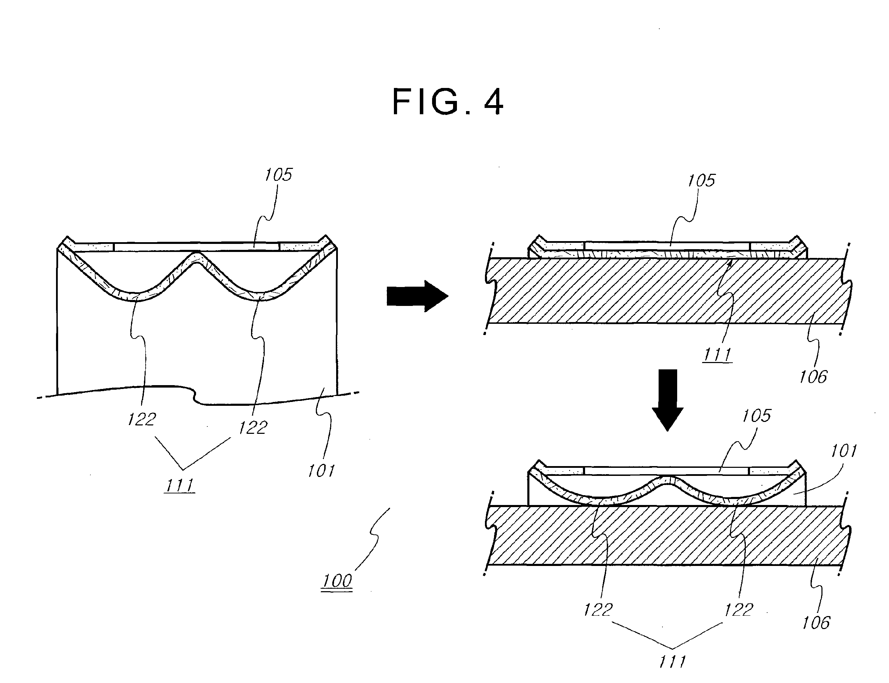

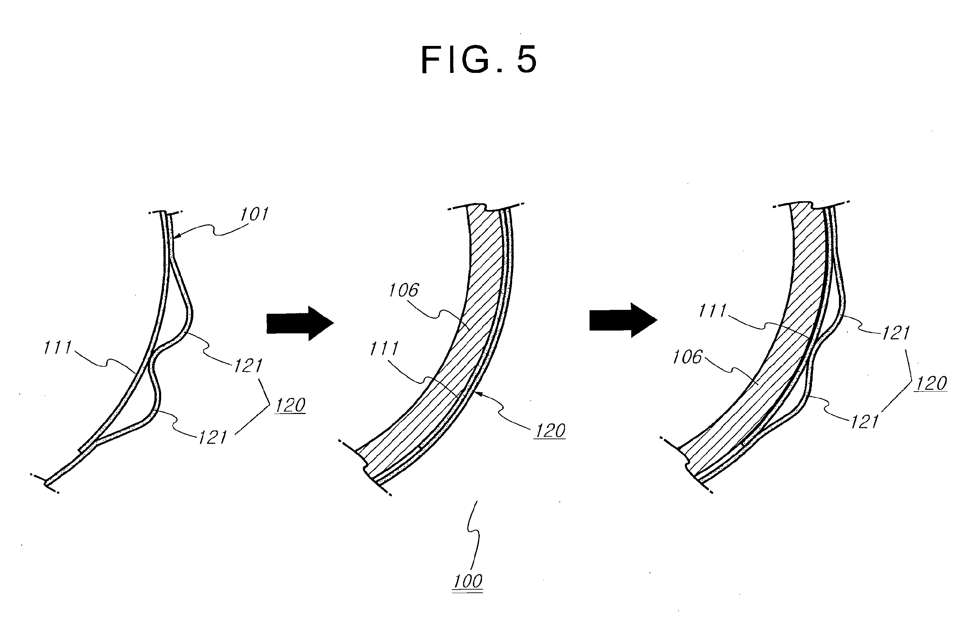

Fig. 1 is a perspective view illustrating one embodiment of a hose clamp in accordance with the present invention; Fig. 2 is a cross-sectional view taken along line A-A in Fig. 1; Fig. 3 is a cross-sectional view taken along line B-B in Fig. 1; Fig. 4 is a cross-sectional view taken along line C-C in Fig. 1; Fig. 5 is a partial cross-sectional view illustrating the deformation state of a portion indicated by D in Fig. 1; Fig. 6 is a perspective view illustrating a conventional hose clamp; and Fig. 7 is a cross-sectional view illustrating the operational state of the conventional hose clamp.

Referring to Fig. 1, a hose clamp 100 is provided with a clamp body 101 which is formed by bending a resilient plate-shaped member of a stainless steel with a certain width. A fastening housing 102 is secured to one end of the clamp body 101, and a fastening screw 104 with a head 103 for using a tool (not shown) by a user is coupled within the fastening housing 102.

The fastening screw 104 is engaged with a plurality of pierced holes 105 formed inwards in a certain length at the other end of the clamp body 101, so that the fastening screw 104 is rotated by the user in a clockwise or counterclockwise direction to pull or push the clamp body 101 through the pierced holes 105, thereby increasing or decreasing the diameter of the clamp body 101.

It is obvious that the diameter of the clamp body 101 formed with the pierced holes 105 should be maximized to facilitate the coupling of a hose 106 to be fastened, while the diameter of the clamp body 101 should be minimized to firmly fasten and restrain the hose 106.

The clamp body 101 of the present invention is integrally provided with two characteristic means: damage prevention means 110 and a compensation means 120. The damage prevention means 110 is designed to prevent the pierced holes 105 or the widthwise edges of the clamp body 101 from penetrating into the hose 106 to damage the surface of the hose during the fastening operation. Meanwhile, the compensation means 120 serves to securely restrain and firmly fasten the hose 106 in an amount being reduced as the diameter of the hose 106 is decreased due to long-term use.

At this point, the damage prevention means 110 is further provided with a hole cover part 111 such that the pierced holes 105 are not brought into contact with the hose 106 even when the end portion of the clamp body 101 is extended to a maximum position to restrain the hose 106.

Formed at the width wise opposite edges of the clamp body 101 and the hole cover part 111 is an approximately W-shaped damage preventing bead 115. The damage preventing bead 115 includes a pressing part 112 in which the width wise opposite ends of the clamp body 101 are formed to penetrate into a direction of the hose 106, and a rim part 113 which is formed at the outside of the pressing part 112 in a peripheral direction of the clamp body 101, facing away from the hose 106. Accordingly, the damage preventing bead 115 serves to prevent damage of the hose 106 and also enhances the fastening force in cooperation with a pressure created by the fluid flowing in the hose 106 to be applied in a direction of the pressing part 112.

The compensation means 120 is formed with one or more compensating beads 121 with a substantially semi-circle shape in a peripheral direction of the clamp body 101 at a location where the pierced holes 105 end, so as to perform a compensation function through restoring forces of the compensating beads 121 when the hose 106 becomes aged while the compensating beads 121 are spread out to restrain the hose 106.

In addition, the hole cover part 111 is provided with one or more minor compensating beads 122, which make it possible to perform a compensation function through restoring forces of the minor compensating beads 122 when the hose 106 becomes aged after the minor compensating beads 122 are spread out to retrain the hose 106.

Meanwhile, the damage preventing bead 115 is formed along the entire periphery of the clamp body 101 as shown in the drawings. Preferably, the damage preventing bead 115 may not be formed at the portions where the pieced holes 105 and the compensation means 120 are positioned, which makes it easy to expand or shrink the clamp body 101 according to the diameter of the hose 106 to be fastened and does not hinder the compensation means 120 to be spread out or restored.

Operation of the hose clamp 100 in accordance with the present invention will be described hereinafter.

When the fastening screw 104 coupled with the fastening housing 102 is rotated in one (release) direction using a tool, such as a screw driver or the like, the diameter of the clamp body 101 is increased to receive the hose 106 therein. After the hose 106 is inserted within the clamp body 101, the fastening screw 104 is rotated in the other (restraint) direction to restrain and fasten the hose 106.

During the restraining operation as the above, the pierced holes 105, which are engaged with the fastening screw 104 to increase or decrease the diameter of the clamp body 101, are not allowed to make direct contact with the hose 106 by means of the hole cover part 111 which is formed by extending the end portion of the clamp body 101.

Further, since the damage preventing beads 115 are formed at the width wise opposite edges of the clamp body 101, and the rim part 113 constituting the damage preventing bead 115 is faced away from the hose 106, it is possible to substantially prevent the hose clamp 100 from damaging the hose 106.

In particular, since the pressing part 112, which constitutes the damage preventing bead 115, is designed to press the hose 106 in a perpendicular direction with respect to the center of the hose 106, the pressing part 112 generates a force to pressurize the hose 106 against the force created by the fluid flowing in the hose 106. At this moment, the force generated by the fluid in the hose 106 serves to resist or push the hose 106 being pressed by the pressing part 112. With help of two such forces, the fastening force of the hose 106 can be maintained in a much more concrete state.

Moreover, when the hose 106 is fastened to be restrained, the compensating beads 121 constituting the compensation means 120 is spread out in a perpendicular direction, i.e., peripheral direction of the hose 106, with respect to the center of the hose 106 by the fastening force, while the minor compensating beads 122 formed at the hole cover part 111 serve to apply fastening forces in a state spread out in an axial direction of the hose 106.

In a state where the hose 106 is firmly fastened, when the hose 106 becomes aged due to a long period of time in service and its diameter is reduced, the compensating beads 121 and the minor compensating beads 122 formed at the clamp body 101 and the hole cover part 111, respectively generate forces to restore themselves to their initial states. Therefore, the diameter of the clamp body 101 is reduced due to such forces of the compensating beads 121 and the minor compensating beads 122 to perform a compensation function corresponding to the diameter of the clamp body 101 being reduced.

As described in the above, it should be appreciated that the hose clamp of the present invention prevents the hose from being damaged during a fastening operation of the hose, and performs a compensation function to adjust the diameter of the clamp body when the hose becomes aged, thereby allowing the hose to be firmly fastened and restrained for a long-term service.

Besides, it should be noted that the hose clamp of the present invention has advantages in that a strong fastening force can be obtained even with a thin material, and that is able to provide machinability of the hose clamp to contribute to a reduction of production costs. Moreover, the hose clamp of the present invention can prevent damage of the hose and improve the overall quality thereof, thereby enhancing its competitiveness in the market.

Although a exemplary embodiment of the present invention has been described for illustrative purposes, those skilled in the art will appreciate that various modifications, additions and substitutions are possible, without departing from the scope of the invention as disclosed in the accompanying claims.

## Claims

1. A hose clamp comprising:
a clamp body (101) formed by bending a resilient plate-shaped member of a stainless steel;
a fastening screw (104) having a head (103) and coupled with a fastening housing (102) which is secured to one end of the clamp body (101);
a plurality of pierced holes (105) formed inwards at the other end of the clamp body (101) to be engaged with the fastening screw (104);
a damage prevention means (110) for preventing the pierced holes (105) or the widthwise edges of the clamp body (101) from penetrating into the hose (106) to damage the surface of the hose (106) during a fastening operation; and
a compensation means (120) integrally formed with the clamp body (101) for firmly restraining and fastening the hose (106) in an amount being reduced as the diameter of the hose (106) is decreased due to long-term use, **characterised in that**
the damage prevention means (110) comprises a hole cover part (111) by extending the end portion of the clamp body (101) so that the pierced holes (105) are not brought into contact with the hose (106).

2. The hose clamp as recited in claim 1, wherein the damage prevention means (110) further comprises a damage preventing bead (115) for preventing damage of the hose (106) and enhancing the fastening force in cooperation with a pressure created by the fluid flowing in the hose (106) to pressurize the hose (106), and
the damage preventing bead (115) comprises a pressing part (112) in which the width wise opposite ends of the clamp body (101) are formed to penetrate into a direction of the hose (106) at the width wise opposite ends of the hole cover part (111) of the clamp body (101) and, a rim part (113) formed at the outside of the pressing part (112) in a peripheral direction of the clamp body (101), facing away from the hose (106).

3. The hose clamp as recited in claim 1, wherein the compensation means (120) comprises one or more compensating beads (121) having a semi-circle shape in a peripheral direction of the clamp body (101) at a location where the pierced holes (105) end, so as to perform a compensation function through restoring forces of the compensating beads (121) when the hose (106) becomes aged after the compensating beads (121) are spread out to restrain the hose (106).

4. The hose clamp as recited in claim 1, wherein the compensation means (120) further comprises minor compensating beads (122) in a peripheral direction of the clamp body (101) to perform a compensation function through their restoring forces when the hose (106) becomes aged after the minor compensating beads (122) are spread out to retrain the hose (106).

## Patentansprüche

1. Schlauchklemme, umfassend:
einen Klemmenkörper (101), der durch Biegen eines elastischen plattenförmigen Elements aus einem Edelstahl gebildet ist;
eine Befestigungsschraube (104), die einen Kopf (103) aufweist und mit einem Befestigungsgehäuse (102) gekoppelt ist, das an einem Ende des Klemmenkörpers (101) befestigt ist;
mehrere Durchbohrungslöcher (105), die am anderen Ende des Klemmenkörpers (101) nach innen gerichtet gebildet sind, um mit der Befestigungsschraube (104) in Eingriff gebracht zu werden;
ein Beschädigungsverhinderungsmittel (110) zum Verhindern, dass die Durchbohrungslöcher (105) oder die Breitenkanten des Klemmenkörpers (101) während eines Befestigungsvorgangs in den Schlauch (106) eindringen, um die Oberfläche des Schlauchs (106)zu beschädigen; und
ein Ausgleichsmittel (120), das einstückig mit dem Klemmenkörper (101) gebildet ist, um den Schlauch (106) in einem Ausmaß fest festzuhalten und zu befestigen, das verringert wird, während der Durchmesser des Schlauchs (106) infolge einer Langzeitverwendung abnimmt, **dadurch gekennzeichnet, dass**
das Beschädigungsverhinderungsmittel (110) ein Lochabdeckteil (111) durch derartiges Erweitern des Endabschnitts des Klemmenkörpers (101), dass die Durchbohrungslöcher (105) nicht mit dem Schlauch (106) in Kontakt gebracht werden, umfasst.

2. Schlauchklemme nach Anspruch 1, wobei das Beschädigungsverhinderungsmittel (110) ferner einen Beschädigungsverhinderungswulst (115) zum Verhindern einer Beschädigung des Schlauchs (106) und Erhöhen der Befestigungskraft in Zusammenwirkung mit einem Druck, der durch das Fluid bewirkt ist, das im Schlauch (106) zur Unterdrucksetzung des Schlauchs (106) fließt, umfasst, und
der Beschädigungsverhinderungswulst (115) ein Pressteil (112), in dem die gegenüberliegenden Breitenenden des Klemmenkörpers (101) gebildet sind, zum Durchdringen in einer Richtung des Schlauchs (106) an den gegenüberliegenden Breitenenden des Lochabdeckteils (111) des Klemmenkörpers (101) und ein Randteil (113) umfasst, das auf der Außenseite des Pressteils (112) in einer Umfangsrichtung des Klemmenkörpers (101), weggerichtet vom Schlauch (106), gebildet ist.

3. Schlauchklemme nach Anspruch 1, wobei das Ausgleichsmittel (120) einen oder mehr Ausgleichswülste (121) mit Halbkreisform in einer Umfangsrichtung des Klemmenkörpers (101) an einer Stelle umfasst, an der die Durchbohrungslöcher (105) enden, um eine Ausgleichsfunktion über Rückführkräfte der Ausgleichswülste (121) auszuführen, wenn der Schlauch (106) alt wird, nachdem die Ausgleichswülste (121) zum Festhalten des Schlauchs (106) ausgebreitet wurden.

4. Schlauchklemme nach Anspruch 1, wobei das Ausgleichsmittel (120) ferner kleinere Ausgleichswülste (122) in einer Umfangsrichtung des Klemmenkörpers (101) umfasst, um eine Ausgleichsfunktion über ihre Rückführkräfte auszuführen, wenn der Schlauch (106) alt wird, nachdem die kleineren Ausgleichswülste (122) zum Festhalten des Schlauchs (106) ausgebreitet wurden.

## Revendications

1. Collier de tuyau comportant :
un corps (101) de collier formé en courbant un élément élastique en forme de plaque en acier inoxydable ;
une vis (104) de serrage dotée d'une tête (103) et couplée à un boîtier (102) de serrage qui est fixé à une extrémité du corps (101) de collier ;
une pluralité de trous (105) percés formés vers l'intérieur à l'autre extrémité du corps (101) de collier pour être mis en prise avec la vis (104) de serrage ;
un moyen (110) de prévention d'endommagement servant à empêcher les trous (105) percés ou les bords dans le sens de la largeur du corps (101) de collier de pénétrer dans le tuyau (106) pour endommager la surface du tuyau (106) pendant une opération de serrage ; et
un moyen (120) de compensation formé d'un seul tenant avec le corps (101) de collier pour immobiliser et serrer fermement le tuyau (106) à un degré qui est réduit à mesure que le diamètre du tuyau (106) diminue du fait d'une utilisation à long terme, **caractérisé en ce que**
le moyen (110) de prévention d'endommagement comprend une partie (111) de recouvrement de trou en étendant la portion d'extrémité du corps (101) de collier de telle sorte que les trous (105) percés ne soient pas amenés en contact avec le tuyau (106).

2. Collier de tuyau selon la revendication 1, dans lequel le moyen (110) de prévention d'endommagement comprend en outre un bourrelet (115) de prévention d'endommagement servant à empêcher l'endommagement du tuyau (106) et à augmenter la force de serrage en coopération avec une pression créée par le fluide s'écoulant dans le tuyau (106) pour pressuriser le tuyau (106), et le bourrelet (115) de prévention d'endommagement comprend une partie (112) de pressage dans laquelle les extrémités opposées dans le sens de la largeur du corps (101) de collier sont formées pour pénétrer dans une direction du tuyau (106) aux extrémités opposées dans le sens de la largeur de la partie (111) de recouvrement de trou du corps (101) de collier, et une partie (113) de rebord formée à l'extérieur de la partie (112) de pressage dans une direction périphérique du corps (101) de collier, orientée à l'opposé du tuyau (106).

3. Collier de tuyau selon la revendication 1, dans lequel le moyen (120) de compensation comprend un ou plusieurs bourrelets (121) de compensation présentant une forme semi-circulaire dans une direction périphérique du corps (101) de collier à un emplacement où les trous (105) percés se terminent, de manière à réaliser une fonction de compensation par le biais de forces de rappel des bourrelets (121) de compensation lorsque le tuyau (106) subit un vieillissement après que les bourrelets (121) de compensation ont été élargis pour immobiliser le tuyau (106).

4. Collier de tuyau selon la revendication 1, dans lequel le moyen (120) de compensation comprend en outre des bourrelets (121) de compensation mineurs dans une direction périphérique du corps (101) de collier pour réaliser une fonction de compensation par le biais de leurs forces de rappel lorsque le tuyau (106) subit un vieillissement après que les bourrelets (122) de compensation mineurs ont été élargis pour immobiliser le tuyau (106).
